## Europäisches Patentamt
## European Patent Office
## Office européen des brevets

(19)

(11) Veröffentlichungsnummer: **0 055 353**
**B1**

(12) **EUROPÄISCHE PATENTSCHRIFT**

(45) Veröffentlichungstag der Patentschrift:
**03.07.85**

(21) Anmeldenummer: **81108789.9**

(22) Anmeldetag: **23.10.81**

(51) Int. Cl.⁴: **G 01 B 7/02,** G 01 B 7/30,
H 03 K 17/60, H 03 K 17/78

(54) **Absolute Längen- oder Winkelmesseinrichtung.**

(30) Priorität: **27.12.80 DE 3049261**

(43) Veröffentlichungstag der Anmeldung:
**07.07.82 Patentblatt 82/27**

(45) Bekanntmachung des Hinweises auf die Patenterteilung:
**03.07.85 Patentblatt 85/27**

(84) Benannte Vertragsstaaten:
**AT CH FR GB IT LI NL SE**

(56) Entgegenhaltungen:
**DE - A - 1 762 444**
**DE - A - 2 340 978**
**DE - A - 2 848 932**

(73) Patentinhaber: **Dr. Johannes Heidenhain GmbH,
Nansenstrasse 17, D-8225 Traunreut (DE)**

(72) Erfinder: **Schmitt, Walter, Hochgernstrasse 22,
D-8225 Traunreut (DE)**

ACTORUM AG

**Beschreibung**

Die Erfindung betrifft eine absolute Längen- oder Winkelmesseinrichtung gemäss dem Oberbegriff des Anspruchs 1.

Bei Codemesseinrichtungen ist es üblich, zur Abfrage der absoluten Positionswerte den Codegeber zur Stromersparnis nur kurzzeitig einzuschalten. Es ist bekannt, diese Einschaltung vom vorhandenen Rechner vornehmen zu lassen, wobei sich der Schalter zum Schalten der Versorgungsspannung für den Codegeber ausserhalb desselben, beispielsweise im Rechner selbst, befindet. Sind im Codegeber die elektronischen Baueinheiten, die auch die Beleuchtungseinrichtung zum Beispiel in Form von lichtemittierenden Dioden enthalten, über lange Leitungen an ein Versorgungsspannungsgerät angeschlossen, so werden diesen Baueinheiten Abblockkondensatoren parallel geschaltet, die zusätzlich ein eventuelles Schwingen von in den Baueinheiten vorgesehenen integrierten Schaltungen verhindern.

Bei jeder Abfrage der Positionswerte durch Ansteuerung des Schalters müssen diese Kondensatoren aufgeladen werden, so dass sich beim schnelleren Schalten erhebliche Ladeströme ergeben; des weiteren wird der Leuchtbeginn der Dioden verzögert. Nach dem Ausschalten entladen sich die Kondensatoren über die elektronischen Baueinheiten und belasten diese länger als notwendig; desgleichen verlängert sich auch die Leuchtdauer der Dioden.

Der Erfindung liegt die Aufgabe zugrunde, eine absolute Längen- oder Winkelmesseinrichtung der genannten Gattung anzugeben, die die erwähnten Nachteile vermeidet.

Diese Aufgabe wird erfindungsgemäss durch die kennzeichnenden Merkmale des Anspruchs 1 gelöst.

Die mit der Erfindung erzielten Vorteile bestehen insbesondere darin, dass ein schnelles Schalten der Versorgungsspannung, ein verzögerungsfreies Ein- und Ausschalten der Dioden und eine weitere Reduzierung des Strombedarfs ermöglicht werden.

Vorteilhafte Ausbildungen der Erfindung entnimmt man den Unteransprüchen.

Ausführungsbeispiele der Erfindung sind in der Zeichnung dargestellt und werden im folgenden näher erläutert.

Es zeigen:

Figur 1 eine erste Schaltungsanordnung und
Figur 2 eine weitere bevorzugte Schaltungsanordnung nach der Erfindung.

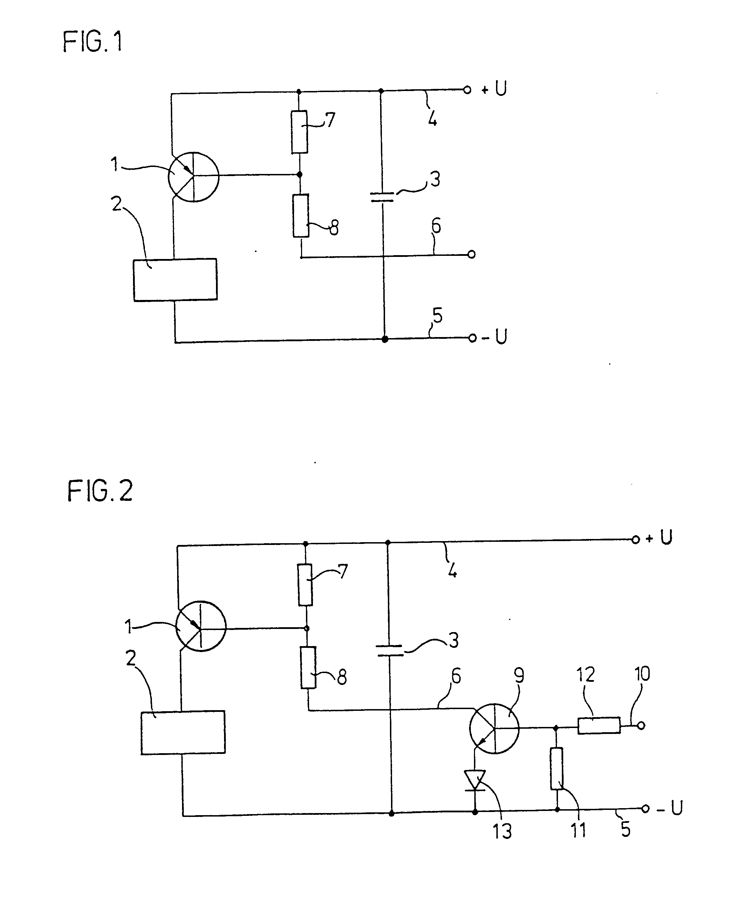

Nach Figur 1 ist in einem nicht gezeigten Codegeber einer Codemesseinrichtung eine Reihenschaltung aus einem Schalttransistor 1 und einer elektronischen Baueinheit 2 parallel zu einem Kondensator 3 mit Leitungen 4, 5 an eine externe Versorgungsspannung +U, –U angeschlossen. Die elektronische Baueinheit 2 möge in nicht dargestellter Weise lichtemittierende Dioden zur Beleuchtung eines Codemassstabs sowie Verstärker, Impulsformerstufen und logische Verknüpfungsschaltungen für die von Photoelementen bei der Abtastung der Codespuren gelieferten Signale enthalten.

Die Basis des Schalttransistors 1 wird zur Abfrage von Positionswerten über eine Steuerleitung 6 von einem in der Codemesseinrichtung vorhandenen, nicht gezeigten Rechner angesteuert; die Widerstände 7, 8 dienen der Pegeleinstellung der Steuersignale.

Da der Kondensator 3 lediglich beim Einschalten der Codemesseinrichtung aufgeladen werden muss und der Schalttransistor 1 bei der Ansteuerung nur das elektronische Bauteil 2 niederohmig an die Versorgungsspannung +U anschaltet, wird ein verzögerungsfreies Ein- und Ausschalten der lichtemittierenden Dioden sowie eine wesentliche Reduzierung des Strombedarfs erzielt, da ein jeweils erneutes Aufladen des Kondensators 3 nach jeder Abfrage der Positionswerte sowie eine verlängerte Leuchtdauer der Dioden vermieden werden; die Lebensdauer der Dioden wird somit wesentlich erhöht. Mit der erfindungsgemässen Schalteinrichtung sind Schaltzeiten kleiner als 1 μs ohne weiteres zu erreichen.

Die Schaltungsanordnung nach Figur 1 gewährleistet, dass bei einem Bruch oder bei einem elektrischen Schluss der Steuerleitung 6 gegen die Versorgungsspannung +U die elektronische Baueinheit 2 von der Versorgungsspannung +U abgeschaltet wird.

Zur weiteren Fehlersicherung ist eine bevorzugte Schalteinrichtung in Figur 2 dargestellt, bei der die Schalteinrichtung nach Figur 1 (gleiche Bezugszeichen) mit einem zusätzlichen Transistor 9 versehen ist, dessen Kollektor mit der Steuerleitung 6 verbunden ist und dessen Basis über eine Steuerleitung 10 vom nicht gezeigten Rechner angesteuert wird. Zwei Widerstände 11, 12 dienen wiederum der Pegeleinstellung des Steuersignals. Der Emitter des Transistors 9 ist über eine Diode 13 in Durchlassrichtung über die Leitung 5 an die Versorgungsspannung –U angeschaltet; die Diode 13 bewirkt eine optimale Anpassung der Schwellenspannung des Transistors 9 an das Ausgangssignal des Rechners.

Die Schaltungsanordnung nach Figur 2 gewährleistet, dass bei einem Bruch oder bei einem elektrischen Schluss der Steuerleitung 10 gegen die Versorgungsspannung –U die elektronische Baueinheit 2 von der Versorgungsspannung +U abgeschaltet wird.

**Patentansprüche**

1. Absolute Längen- oder Winkelmesseinrichtung mit einer Codemessteilung, einer elektrischen Abtasteinheit, die wenigstens eine Baueinheit (2) zum Abtasten der Codemessteilung aufweist, einem Schaltelement (1) zum Ein- und Ausschalten der Versorgungsspannung (+U, –U) der wenigstens einen Baueinheit (2), das mit der wenigstens einen Baueinheit (2) bezüglich der Versorgungsspannung (+U, -U) in Reihe geschaltet ist, und wenigstens einem der wenigstens einen Baueinheit (2) zugeordneten Abblockkondensator (3), dadurch gekennzeichnet, dass der wenigstens eine Abblockkondensator (3) parallel zu der Reihenschaltung aus dem Schaltelement (1) und der wenigstens einen Baueinheit (2) geschaltet ist.

2. Absolute Längen- oder Winkelmesseinrichtung nach Anspruch 1, dadurch gekennzeichnet, dass das Schaltelement (1) von einem Transistor, vorzugsweise von einem Feldeffekttransistor, gebildet ist.

3. Absolute Längen- oder Winkelmesseinrichtung nach Anspruch 2, dadurch gekennzeichnet, dass die Basis des Transistors (1) von einem Rechner angesteuert ist.

4. Absolute Längen- oder Winkelmesseinrichtung nach Anspruch 2, dadurch gekennzeichnet, dass die Basis des Transistors (1) mit dem Kollektor eines weiteren Transistors (9) verbunden ist, dessen Basis vom Rechner angesteuert ist.

5. Absolute Längen- oder Winkelmesseinrichtung nach Anspruch 2, dadurch gekennzeichnet, dass die Basis des Transistors (1) je nach Leitungstyp über einen Widerstand (7) mit dem positiven bzw. negativen Pol der Versorgungsspannung (+U, -U) verbunden ist.

## Claims

1. Absolute length or angle measuring device comprising a code measuring graduation, an electric scanning unit which is provided with at least one component (2) for scanning the code measuring graduation, a switching element (1) for switching on and off the supply voltage (+U, -U) of the component (2), this element being connected in series with the component (2), of which there is at least one, with respect to the supply voltage (+U, -U), and at least one blocking capacitor (3) which is associated with the component (2), of which there is at least one, characterised in that the blocking capacitor (3), of which there is at least one, is connected in parallel with the series circuit of the switching element (1) and the component (2), of which there is at least one.

2. Absolute length or angle measuring device according to Claim 1, characterised in that the switching element (1) is formed by a transistor, preferably by a fieldeffect transistor.

3. Absolute length or angle measuring device according to Claim 2, characterised in that the base of the transistor (1) is controlled by a computer.

4. Absolute length or angle measuring device according to Claim 2, characterised in that the base of the transistor (1) is connected to the collector of another transistor (9), the base of which is controlled by the computer.

5. Absolute length or angle measuring device according to Claim 2, characterised in that the base of the transistor (1) is connected via a resistance (7) to the positive or negative terminal of the supply voltage (+U, -U), depending on the type of line used.

## Revendications

1. Dispositif de mesure absolue de longueurs ou d'angles comprenant une graduation de mesure codée, une unité de balayage électrique munie au moins d'un composant (2) pour balayer la graduation codée, un élément de commutation (1) qui branche et coupe la tension d'alimentation (+U, -U) d'au moins un composant (2) et qui est monté en série avec au moins un composant (2) par rapport à la tension d'alimentation (+U, -U), et au moins un condensateur de déblocage (3) associé à au moins un composant (2), caractérisé par le fait qu'au moins un condensateur de déblocage (3) est monté en parallèle par rapport au montage en série constitué par l'élément de commutation (1) et au moins le composant (2).

2. Dispositif de mesure absolue de longueurs ou d'angles selon la revendication 1, caractérisé par le fait que l'élément de commutation (1) est formé par un transistor, de préférence par un transistor à effet de champ.

3. Dispositif de mesure absolue de longueurs ou d'angles selon la revendication 2, caractérisé par le fait que la base du transistor (1) est excitée par un calculateur.

4. Dispositif de mesure absolue de longueurs ou d'angles selon la revendication 2, caractérisé par le fait que la base du transistor (1) est reliée au collecteur d'un autre transistor (9) dont la base est excitée par le calculateur.

5. Dispositif de mesure absolue de longueurs ou d'angles selon la revendication 2, caractérisé par le fait que la base du transistor (1) selon le type de la conductivité est reliée par une résistance (7) au pôle positif ou au pôle négatif de la tension d'alimentation (+U, -U).

FIG.1

FIG.2